Europäisches Patentamt

European Patent Office

Office européen des brevets

(11) Publication number: **0 073 598**
**B1**

(12) **EUROPEAN PATENT SPECIFICATION**

(45) Date of publication of patent specification: **27.12.85**

(21) Application number: **82304345.0**

(22) Date of filing: **18.08.82**

(51) Int. Cl.⁴: **F 16 C 11/04, E 02 F 3/42,
B 25 J 17/02, B 66 F 11/04**

(54) Hinge mechanisms.

(30) Priority: **20.08.81 GB 8125432**
**16.03.82 GB 8207656**
**17.05.82 GB 8214312**

(43) Date of publication of application:
**09.03.83 Bulletin 83/10**

(45) Publication of the grant of the patent:
**27.12.85 Bulletin 85/52**

(84) Designated Contracting States:
**AT BE CH DE FR GB IT LI LU NL SE**

(56) References cited:
**DE-A-2 408 405**
**GB-A-1 177 238**
**US-A-2 813 645**
**US-A-3 057 490**
**US-A-3 085 648**

(73) Proprietor: **UNIVERSITY OF BRADFORD**
**Bradford, West Yorkshire, BD7 1DP (GB)**

(72) Inventor: **Baker, Alan**
**University of Bradford**
**Bradford BD7 1DP (GB)**

(74) Representative: **Wharton, Peter Robert et al**
**Urquhart-Dykes & Lord 11th Floor Tower House**
**Merrion Way**
**Leeds, LS2 8PB West Yorkshire (GB)**

Courier Press, Leamington Spa, England.

## Description

The present invention relates to hinge mechanisms, especially powered hinge mechanisms.

There are applications where it may be desired for two members to be hinged in such a manner that relative pivotal movement of the two members may be actuated by means of a single force applied to one or both of the members. Examples of such applications are in industrial robot arms, artificial limbs, and arms of, for instance, mechanical diggers or excavators, loaders, and elevator platforms used, for example, for lifting workmen into normally inaccessible places.

Common hinge mechanisms of this type may use either a linear actuator or a rotary actuator. The rotary actuator is capable of allowing a large degree of relative pivotal motion between the two members with substantially equal torque over the whole of the pivotal range. However, such rotary actuators are generally expensive and are often more complex than the linear actuators.

The known hinge mechanisms using linear actuators such as hydraulic piston and cylinder arrangements, allow a relatively limited range of pivotal movement between the two members, with the torque provided at the hinge varying considerably with the angle between the two members.

GB—A—1177238 discloses a hinge mechanism for a crane loading arm. The torque requirement is small for a large part of the working range since it is operated without load for over half its working range. US—A—3891056 corresponding to DE—A—2 408 405 also discloses a hinge mechanism, for a lifting platform, in which two interconnected hinge elements are employed, but the geometry is such that the torque characteristics vary widely over the working range.

The present invention seeks to provide a hinge mechanism capable of operation over at least 180° in which the torque characteristics are relatively constant over the operating range and can, by appropriate choice of geometry, be maximised towards the extremes of the working range.

According to the present invention there is provided a hinge mechanism for allowing relative pivotal movement between a first and second member, the hinge mechanism comprising a first hinge element pivotally attached to said first member at a first point, a second hinge element pivotally attached to the second member at a second point, the second hinge element also being pivotally attached to said first hinge element at a third point, and there being provided means for applying a force to a fourth point lying on said first hinge element characterised in that the force is applied in a direction substantially parallel to a line interconnecting a fifth point, at which the first and second members are pivotally attached to one another, and the said second point, said third point lies substantially halfway between said first and fourth points and the second hinge element is equal in length to half the distance A between the first and fourth points, and in that the distance C between said second and third points is from one to three times the distance B between the first and fifth points.

Preferably said force is applied to said second hinge element by means of a linear actuator mounted on said second member. More preferably said actuator is hydraulically, pneumatically or electrically operated. Most preferably said linear actuator is a piston and cylinder arrangement.

Preferably said hinge elements are substantially elongate bars.

Preferably said first, third and fourth points lie on a substantially straight line.

The first and second members are pivotally attached to one another at a fifth point, either directly or, for example, through a third hinge element pivotally connected to said second member at a fifth point and rigidly attached to said first member at a sixth point.

Preferably the distance A between said first and fourth points on said first element is from two to six times the distance B between the fifth and first points. More preferably the distance A on said first element is between three and five times the distance B. Most preferably the distance A is three, four or five times the distance B.

Preferably the distance C is from 1.5 to 2.5 times the distance B. More preferably the distance C is 1.5, 2.0 or 2.5 times the distance B.

Preferably the distance D between the fifth point on the second member and the second point on said second member is from one to three times the distance B. Preferably the distance D is from approximately from 1.414 to 2.0 times the distance B. Most preferably the distance D is 1.414, 1.732, or 2.0 times the distance B.

Preferably the distance H perpendicularly from the plan in which the linear force is applied to the first hinge element to the second point on said second member is from one to five times the distance B. More preferably said distance H is from 1.5 to four times the distance B. Most preferably the distance H is 1.9, three or four times the distance B.

A hinge mechanism according to the present invention allows a range of pivotal movements between two members up to or greater than 180°, with a substantially uniform torque output over the whole range of movement. Alternatively dimensions can be selected as indicated later to give maximum torque either at mid-range or at ±90° measured from the mid-position.

Preferably the distance F, relative to said second member, of which said fourth point may be displaced by said substantially linear force is from two to five times the distance B. More preferably the distance F is from 2.828 to 4.0 times the distance B. Most preferably the distance F is 2.828, 3.464 or 4.00 times the distance B.

Preferably said first and second members form parts of artificial or prosthetic or robot limbs, elevator platforms, or mechanical excavators, diggers or loaders.

The invention will be described further by way of example with reference to the accompanying drawings, in which:

Figure 1 is a diagrammatic representation of a hinge mechanism in accordance with the invention;

Figure 2 is a diagrammatic representation of an elevated platform equipped with hinge mechanisms in accordance with the invention;

Figure 3 is a diagram showing 8 possible linkages for a hinge mechanism of the invention;

Figure 4 is a graph of torque against angle for the linkages of Figure 3;

Figure 5 is a diagrammatic representation of another embodiment of elevated platform equipped with hinge mechanisms in accordance with the invention; and

Figure 6 is a view of a robot arm incorporating hinges according to the invention.

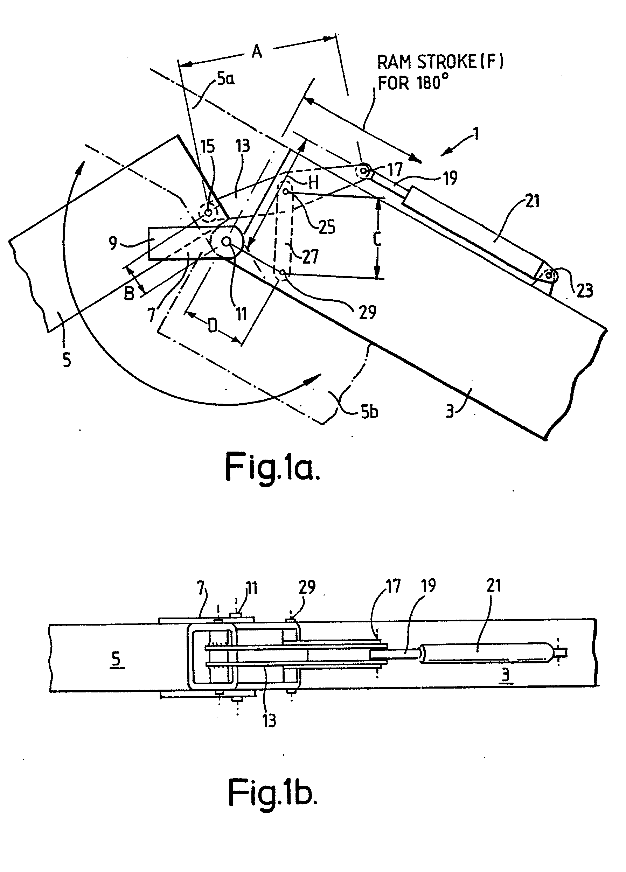

Referring now to figure 1, a hinge mechanism indicated generally by 1 in accordance with the present invention comprises a first member 5 and a second member 3 pivotally attached together by means of a third element 7 fixedly attached at 9 to the member 5 and pivotally attached at 11 to the member 3. The first member 5 is thus able to pivot relative to the second member 3 about the pivot point 11.

A first hinge element 13, hereinafter referred to as a 'coupler', is pivotally attached by pivot pin 15 to the first member 5 and by pivot point 17 to the end of a piston 19 of a hydraulic linear actuator 21. The end of the actuator 21 remote from the piston 19 is connected to a projection struck up from the second member 3 by means of a pivot pin 23 passing through the end of the actuator 21.

At the mid point of the first hinge element 13 is connected by means of a pivot pin 25 one end of a second hinge element 27, hereinafter referred to as a 'rocker'. The other end of the rocker 27 is pivotally connected by means of a pivot pin 29 to the second member 3.

In use, the relative dispositions and dimensions of the elements of the hinge mechanism 1, as described more fully hereinafter, are such that the movement of the piston 19 of the linear actuator 21 causes pivotal movement of the elongate member 5 relative to the elongate member 3 about the pivot point 11. The range of the pivotal movement is from 0° to 180° between the first and second members 5 and 3 respectively illustrated in figure 1 as positions 5a and 5b respectively.

A hinge mechanism such as that shown in figure 1 may be used in many applications with variations of materials, sizes and actuators. A suitable application may be, for instance, for industrial robot arms, or similarly for artificial or prosthetic limbs for humans. However, in the latter application it may be advantageous for the linear actuator to be situated within the outer surface of the elongate members so as not to be conspicuous.

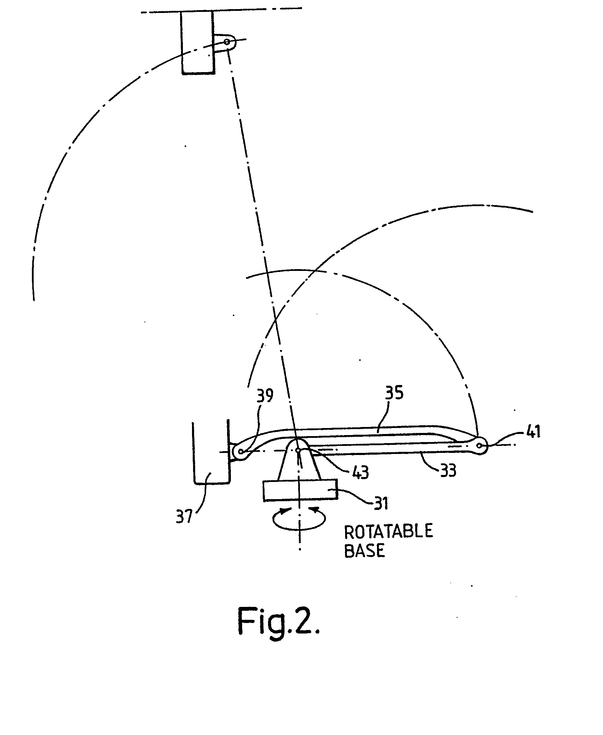

With suitably strengthened components, a hinge mechanism according to the present invention could be used in heavier industrial situations such as, for instance, for elevator platforms. Such an elevator platform is shown in Figure 2 of the accompanying drawings. The elevator platform comprises a rotatable base 31, the base being rotatable in a horizontal plane, to which is pivotally connected at pivot 43 a first elongate member 33. At the end of the first elongate member 33 is pivotally connected a second elongate member 35. At the remaining end of the second elongate member 35 is pivotally connected a support platform 37 which may, for instance, carry men or other apparatus. All the pivots in the elevator platform arrangement are disposed so as to allow the platform to be pivoted in a vertical plane. Thus various heights and positions can be achieved by the combined rotation of the base 31 and the relative pivoting of the elongate members 33 and 35, and between the member 35 and the support platform 37.

The pivots 43 and 41 could in such an arrangement advantageously utilise hinge mechanisms according to the present invention, where the increased pivotal movement allowed by such hinges would allow the elevator platform arrangement to be more flexible and to have a greater range of operation. The pivot controlling the support platform 37 is also controlled by a hinge mechanism according to the present invention or, in an alternative embodiment, is related to the movement of the remaining pivots 43 and 41 by means of a series of parallelogram linkages.

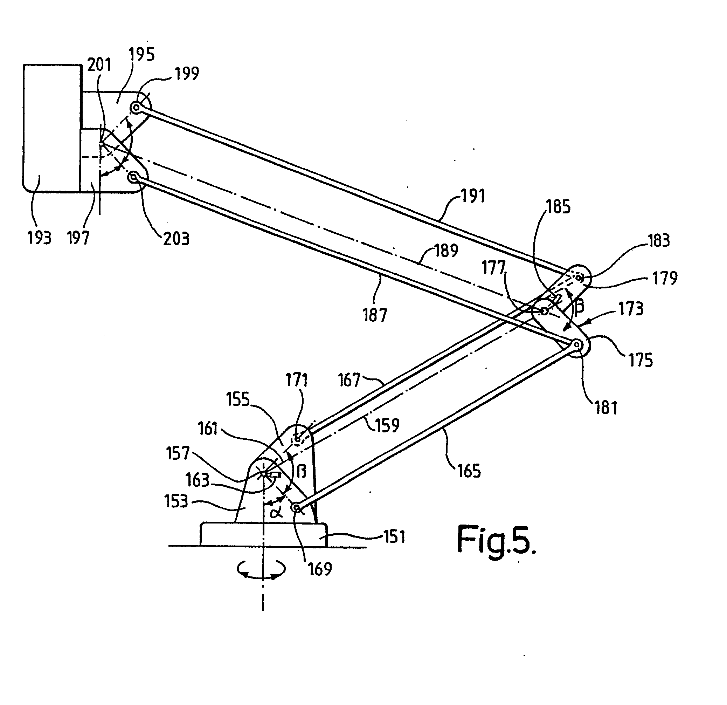

Figure 5 of the accompanying drawings shows an elevator platform arrangement using the parallelogram linkages mentioned above. The arrangement is mounted on a substantially flat, circular base plate 151, which is rotatable about a vertical axis passing through the centre of the base 151. Projecting upwardly from the upper surface of the base 151 are two substantially parallel ears 153 and 155. The ears 153 and 155 are of different heights, ear 155 being taller than ear 153.

Lying between the ears 153 and 155 is a substantially horizontal pivot 157, positioned near the top of the shorter ear 153. An elongate arm 159 is pivotally connected by one of its ends 161 to the pivot 157, so that the arm 159 is free to move in a vertical plane. A power hinge mechanism 163 is arranged between the ears 153 and 155 so as to be capable of pivoting the arm 159 about the pivot 157 over a range of approximately 180° from the horizontal.

Extending from, and pivotally connected to, the upstanding ears 153 and 155 are elongate arms 165 and 167. The arms 165 and 167 are of substantially equal length to the arm 159, and lie parallel to the arm 159. The arms 165 and 167 are pivotable in the same vertical plane as the arm 159, about pivots 169 and 171 respectively. The pivots 169 and 171 lie in the same vertical plane, and are positioned on the ears 153 and 155, such that tha planes passing through pivots 171 and 157, and through pivots 169 and 157, lie at an angle of 90° to one another. Angle B is preferably 90° but in alternative embodiments, angle B may be any desired angle, although small valves of angle B are not desirable when a range of arm movement of greater than approximately 160°.

In addition, the plane passing through the pivots 169 and 157 lies at an angle A of 45° from the vertical, but in alternative embodiments angle A may be altered to any desired angle.

The ends of the elongate arms 159, 165 and 167 remote from the base 151 are pivotally connected to an intermediate member 173. The member 173 comprises a pivot pin 177 substantially horizontally between the ends of two struts 173 and 175. The struts 179 and 175 are fixed substantially at right angles to each other and may be fixed to the pivot pin 177, although in alternative embodiments the angle B may be an angle other than 90°, and the angle between the struts 179 and 175, is equal to angle B.

The end of the arm 159 is pivotally connected to the pivot pin 177, whilst the end of the arm 165 is pivotally connected at 181, near to the end of the strut 175 which is remote from the pivot pin 177, and the end of the arm 167 is similarly connected at 183 near to the corresponding end of the strut 179.

Pivotally connected to the pivots 181, 177 and 183 are also ends of elongate arms 187, 189 and 191 respectively. The arms 187, 189 and 191 are of equal length and extend parallel to one another. Associated with the members 159 and 189 is a power hinge mechanism according to the present invention arranged so that the angle between the corresponding arms 159 and 189 may be varied over a range of approximately 0° to 180°.

Attached to the ends of the arms 187, 189 and 191, remote from the member 173, is a platform 193 upon which a man or other objects may stand. Projecting from the platform 193 are two substantially triangular ears 195 and 197 lying in substantially parallel vertical planes. Pivotally attached to the ear 197 at 203 is the end of the arm 187, and pivotally attached to the ear 195 at 199 is the end of the arm 191. Extending substantially horizontally between the ears 195 and 197 is a pivot pin 201, to which is pivotally attached the er d of the arm 189.

The pivots 199, 201 and 203 are arranged so that the plane passing through the pivots 199 and 201 lies at angle B, in this embodiment 90°, to the plane passing through pivots 203 and 201. In addition, the plane passing through pivots 203 and 201 lies at angle A to the vertical, angle A in this embodiment being 45°.

In use the combination of the movements of the arms 159, 165 and 167, and 189, 187 and 191, actuated by the power hinge mechanisms 163 and 185, allow a large degree of movement of the platform 193, whilst retaining the floor of the platform 193 in a horizontal orientation.

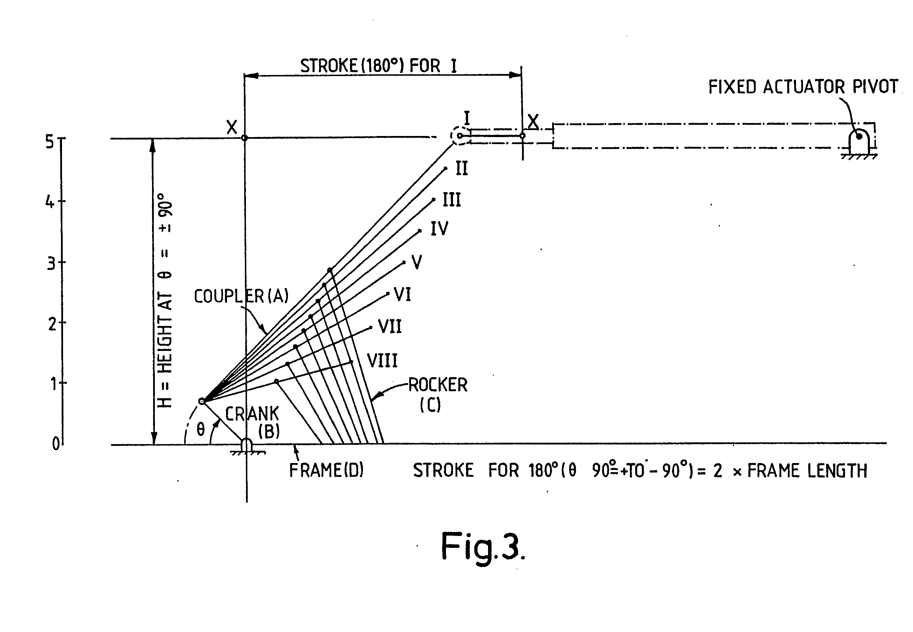

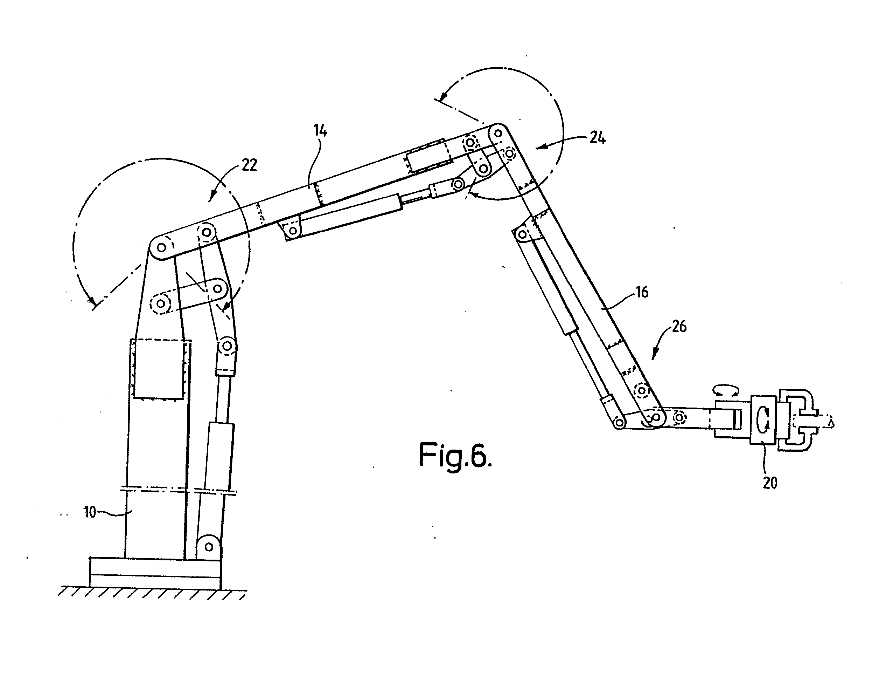

In figure 6 there is illustrated the application of hinges in accordance with the invention to an industrial robot arm. The robot arm comprises a primary support member 10 mounted on a rotatable base 12, the support member 10 is connected to a first extension member 14 which is in turn connected to a second extension member 16 which is itself connected to a grip or tool member 20 in each case by a power hinge mechanism in accordance with the invention generally designated 22, 24, and 26 respectively. The operation of the hinge mechanism 22, 24 and 26 is substantially as previously described in relation to figure 1 and, by appropriate selection of the hinge parameters, as will be described more fully hereinafter in relation to configuration VIII in figure 3, relative displacement of adjacent members of up to 270° is possible.

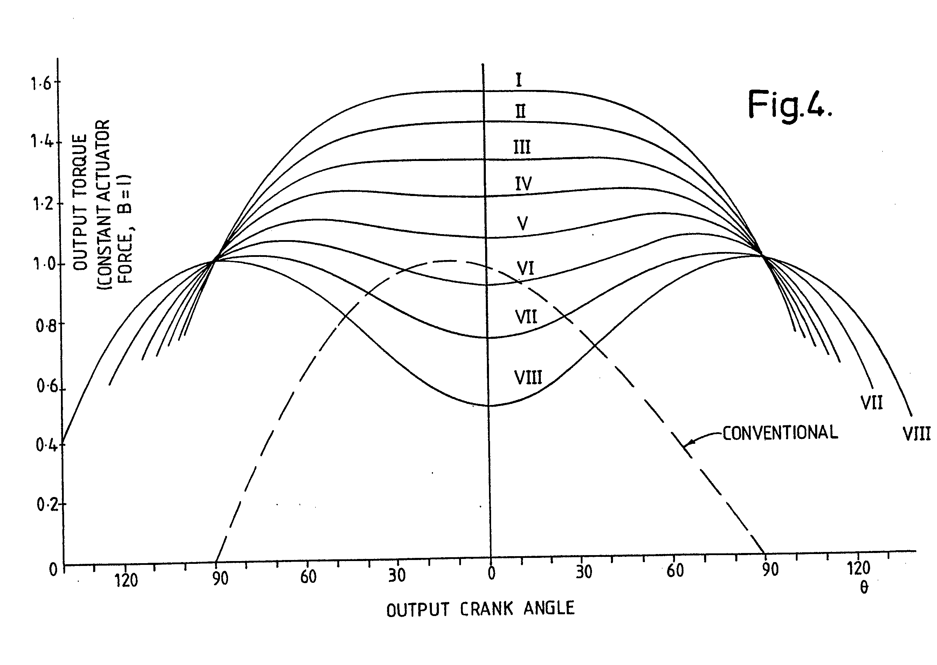

Referring now to figures 3 and 4 of the drawings, figure 3 shows diagrammatically eight alternative arrangements of a hinge mechanism in accordance with the invention. The lengths of the coupler and rocker elements are varied as well as the relative dispositions of the second and fifth points. In each case the third point is situated mid-way between the first and fourth points.

Referring to both figures 1 and 3, for each of the cases I to VIII the distance A represents the length of the coupler, the distance B represents the separation of pivot points 11 and 15 which is maintained constant and set equal to unity. The length of the rocker 27 is indicated by C and the distance of the rocker pivot 29 from the pivot 11 is indicated by D. Finally, the height of the actuator pivot 17 above the rocker pivot 29, measured at values of $\theta$ of $\pm 90°$, is indicated by H. The angle $\theta$ is the angle between the first and second members 5 and 3 and is set at zero at the midpoint of the range of movement of the two members. Figure 4 then shows graphically the output torque for constant actuator torque plotted against output angle compared with the conventional hinge mechanism in which the actuator is merely connected across the two members pivotally attached together.

In the table given below the various parameters are listed for the eight arrangements and these correspond with the eight curves shown figure 4. It can be seen from figure 4 that the output torque may be kept substantially constant throughout the operating range by suitable selection of parameters in, for example, configurations III, IV and V, or may be made to peak towards the extreme ends of its range as in, for example, VII and VIII. It will be seen that with the arrangement illustrated in VIII the range of operation of the device of the invention is approximately 270°, and a device having substantially these parameters may be employed at each of the hinge mechanisms 22, 24 and 26 illustrated in the robot arm of figure 6.

| Crank (B)=1 unit | | | | | |
|---|---|---|---|---|---|
| | Rocker (C) | Frame (D) | Coupler (A) | Height Deviation | |
| | | | | (H) | (ΔH) |
| I | 3 | 2.236 | 6 | 5 | +0.053 |
| II | 2.75 | 2.121 | 5.5 | 4.5 | +0.029 |
| III | 2.5 | 2 | 5 | 4 | +0.010 |
| IV | 2.25 | 1.871 | 4.5 | 3.5 | −0.035 |
| V | 2 | 1.732 | 4 | 3 | −0.078 |
| VI | 1.75 | 1.581 | 3.5 | 2.5 | −0.136 |
| VII | 1.5 | 1.414 | 3 | 2 | −0.218 |
| VIII | 1.25 | 1.225 | 2.5 | 1.5 | −0.359 |

Hinge mechanisms in accordance with the present invention may thus have varying properties for different applications, whilst retaining the advantage of pivotal movements of 180° or more. Thus, as already mentioned, for some uses such as robotic arms the configuration having a wide range of movement may be advantageous while for other uses a more uniform torque against angle curve may be preferable.

All of the components of hinge mechanism according to the invention may be of any suitable material such as metal and/or plastics material, and the linear actuator of the hinge mechanism may be electrical, pneumatic, hydraulic or of any other suitable form.

As can be seen from the table above the deviation ΔH from the height H is relatively small and the actuator operates substantially parallel to a line drawn between the pivots 11 and 29 throughout the whole of its cycle. There is, of course, some deviation from this, and it is preferred to fix the height of the actuator pivot 23 at a height of

$$\frac{H+\Delta H}{2}.$$

For maximum torque at $\theta=0°$ the height of the pivot should be $H-\Delta H$, whereas for maximum torque at $\theta=\pm 90°$ the height should be H.

**Claims**

1. A hinge mechanism for allowing relative pivotal movement between a first (5) and second (3) member, the hinge mechanism comprising a first hinge element (13) pivotally attached to said first member (5) at a first point (15), a second hinge element (27) pivotally attached to the second member (3) at a second point (29), the second hinge element (27) also being pivotally attached to said first hinge element (13) at a third point (25), and there being provided means (21) for applying a force to a fourth point (17), lying on said first hinge element (13), in a direction substantially parallel to a line interconnecting a fifth point (11), at which the first (5) and second (3) members are pivotally attached to one another, and the said second point (29), characterised in that said third point (25) lies substantially halfway between said first (15) and fourth (17) points, and the second hinge element (27) is equal in length (C) to half the distance A between the first (15) and fourth (17) points, and in that the distance C between said second (29) and third (25) points is from one to three times the distance B between the first (15) and fifth (11) points.

2. A hinge mechanism as claimed in claim 1 in which the third point (25) lies on a straight line joining the first (15) and fourth (17) points.

3. A hinge mechanism as claimed in any of claims 1 or 2 in which the means (21) for applying force is a linear actuator mounted on said second member (3).

4. A hinge mechanism as claimed in claim 3 in which the linear actuator (21) is hydraulically, pneumatically or electrically operated.

5. A hinge mechanism as claimed in any one of claims 1 to 4 in which said first (5) and second (3) members are pivotally attached to one another at the fifth point (11) either directly or through a third hinge element (7) pivotally connected to such second member at the fifth point and rigidly attached to said first member at a sixth point (9).

6. A hinge mechanism as claimed in claim 5 in which the distance A between said first (15) and fourth (17) points is from two to six times the distance B between the said fifth (11) and first (15) points.

7. A hinge mechanism as claimed in any one of claims 1 to 6 in which the distance D between the said fifth (11) and second (29) points is from one to three times the distance B between the said fifth (11) and first (15) points.

8. A hinge mechanism as claimed in any one of claims 1 to 7 in which the distance H perpendicularly from the plane in which the linear force is applied to the first hinge element (13) to the second point (29) on the said second member (3) is from one to five times the distance B between the said fifth (11) and first (15) points.

9. A hinge mechanism as claimed in claim 7 in which the stroke of the means for applying force (21) is twice the distance D for a displacement of 180°.

10. An artificial, prosthetic or robot limb embodying one or more hinge mechanisms as claimed in any one of claims 1 to 9.

11. An elevated platform, mechanical excavator, digger or loader embodying one or more hinge mechanisms as claimed in any one of claims 1 to 9.

## Revendications

1. Mécanisme articulé permettant un mouvement de pivotement relatif entre un premier organe (5) et un deuxième organe (3), le mécanisme articulé comprenant un premier élément d'articulation (13) fixé de façon pivotante au premier organe (5) en un premier point (15), un deuxième élément d'articulation (27) fixé de façon pivotante au deuxième organe (3) en un deuxième point (29), le deuxième élément d'articulation (27) étant également fixé de façon pivotante au premier élément d'articulation (13) en un troisième point (25), des moyens (21) étant utilisés pour exercer une force sur un quatrième point (17) disposé sur le premier élément d'articulation (13) dans une direction sensiblement parallèle à une ligne reliant un cinquième point (11), sur lequel le premier organe (5) et le deuxième organe (3) sont fixés de façon pivotante ensemble, et le deuxième point (29), caractérisé en ce que le troisième point (25) se trouve sensiblement à mi-distance entre le premier (15) et le quatrième (17) point, et en ce que le deuxième élément d'articulation (27) a une longueur C égale à la moitié de la distance A entre le premier (15) et le quatrième point (17), et en ce que la distance C entre les deuxième (29) et troisième (25) points est de une à trois fois la distance B entre le premier (15) et le cinquième (11) point.

2. Mécanisme articulé selon la revendication 1, caractérisé en ce que le troisième point (25) est situé sur une ligne droite reliant le premier (15) et le quatrième (17) point.

3. Mécanisme articulé selon l'une des revendications 1 ou 2, caractérisé en ce que les moyens (21) utilisés pour appliquer une force sont constitués par une appareil de commande linéaire monté sur le deuxième organe (3).

4. Mécanisme articulé le revendication 3, caractérisé en ce que l'appareil de commande linéaire est actionné hydrauliquement, pneumatiquement ou électriquement.

5. Mécanisme articulé selon l'une quelconque des revendications 1 à 4, caractérisé en ce que le premier organe (5) et le deuxième organe (3) sont articulés entre eux au cinquième point (11) soit directement, soit par l'intermédiaire d'un troisième élément d'articulation (7) relié de façon pivotante au deuxième organe au cinquième point et fixé rigidement au premier organe en un sixième point (9).

6. Mécanisme articulè selon la revendication 5, caractérisé en ce que la distance A entre le premier point (15) et le quatrième point (17) est de deux à six fois la distance B entre le cinquième point (11) et le premier point (15).

7. Mécanisme articulé selon l'une quelconque des revendications 1 à 6, caractérisé en ce que la distance D entre le cinquième point (11) et le deuxième point (29) est de une à trois fois la distance B entre le cinquième point (11) et le premier point (15).

8. Mécanisme articulé selon l'une quelconque des revendications 1 à 7, caractérisé en ce que la distance H perpendiculaire entre le plan dans lequel la force linéaire est appliquée au premier élément d'articulation (13) et le deuxième point (29) sur le deuxième organe (3) est de une à cinq fois la distance B entre le cinquième point (11) et le premier point (15).

9. Mécanisme articulé suivant la revendication 7, caractérisé en ce que la course des moyens (21) utilisés pour l'application d'une force est le double de la distance D pour un déplacement de 180°.

10. Membre artificiel, prothèse ou robot comprenant un ou plusieurs mécanismes articulés selon l'une quelconque des revendications 1 à 9.

11. Plateforme surélevée, excavateur mécanique, engin de creusement ou chargeuse comprenant un ou plusieurs mécanismes articulés selon l'une quelconque des revendications 1 à 9.

## Patentansprüche

1. Gelenkmechanismus, der eine relative Drehbewegung zwischen einem ersten Teil (5) und einem zweiten Teil (3) ermöglicht, wobei der Gelenkmechanismus ein erstes Gelenkteil (13), das an einem ersten Punkt (15) drehbar an dem ersten Teil (5) angebracht ist, und ein zweites Gelenkteil (27) aufweist, das an einem zweiten Punkt (29) drehbar an dem zweiten Teil (3) angebracht ist, wobei das zweite Gelenkteil (27) an einem dritten Punkt (25) auch an dem ersten Gelenkteil (13) drehbar angebracht ist, wobei eine Einrichtung (21) vorgesehen ist, um eine Kraft auf einen vierten Punkt (17), der auf dem ersten Gelenkteil (13) liegt, in einer Richtung auszuüben, die im wesentlichen parallel zu einer Linie liegt, welche einen fünften Punkt (11), an dem das erste Teil (5) und das zweite Teil (3) drehbar miteinander verbunden sind, und den zweiten Punkt (29) verbindet, dadurch gekennzeichnet, daß der dritte Punkt (25) im wesentlichen auf halber Strecke zwischen dem ersten Punkt (15) und dem vierten Punkt (17) liegt, daß das zweite Gelenkteil (27) eine Länge (C) hat, die gleich der halben Strecke (A) zwischen dem ersten Punkt (15) und dem vierten Punkt (17) ist, und daß die Strecke (C) zwischen dem zweiten Punkt (29) und dem dritten Punkt (25) das Einfache bis Dreifache der Strecke (B) zwischen dem ersten Punkt (15) und dem fünften Punkt (11) ausmacht.

2. Gelenkmechanismus nach Anspruch 1, dadurch gekennzeichnet, daß der dritte Punkt (25) auf einer geraden Linie liegt, die den ersten Punkt (15) und den vierten Punkt (17) verbindet.

3. Gelenkmechanismus nach Anspruch 1 oder 2, dadurch gekennzeichnet, daß die Einrichtung (21) zur Ausübung einer Kraft ein linearer Kraftantrieb ist, der an dem zweiten Teil (3) montiert ist.

4. Gelenkmechanismus nach Anspruch 3, dadurch gekennzeichnet, daß der lineare Kraftantrieb (21) hydraulisch, pneumatisch oder elektrisch betrieben ist.

5. Gelenkmechanismus nach einem der Ansprüche 1 bis 4, dadurch gekennzeichnet, daß das erste Teil (5) und das zweite Teil (3) an dem fünften Punkt (11) drehbar aneinander entweder direkt oder über ein drittes Gelenkteil (7) angebracht sind, das an dem fünften Punkt drehbar mit dem zweiten Teil verbunden und an einem sechsten Punkt (9) fest an dem ersten Teil angebracht ist.

6. Gelenkmechanismus nach Anspruch 5, dadurch gekennzeichnet, daß die Strecke (A) zwischen dem ersten Punkt (15) und dem vierten Punkt (17) das Zweifache bis Sechsfache der Strecke (B) zwischen dem fünften Punkt (11) und dem ersten Punkt (15) ausmacht.

7. Gelenkmechanimus nach einem der Ansprüche 1 bis 6, dadurch gekennzeichnet, daß die Strecke (D) zwischen dem fünften Punkt (11) und dem zweiten Punkt (29) das Einfache bis Dreifache der Strecke (B) zwischen dem fünften Punkt (11) und dem ersten Punkt (15) ausmacht.

8. Gelenkmechanismus nach einem der Ansprüche 1 bis 7, dadurch gekennzeichnet, daß die Strecke (H) senkrecht von der Ebene, in der die lineare Kraft auf das erste Gelenkteil (13) ausgeübt wird, zu dem zweiten Punkt (29) am zweiten Teil (3) das Einfache bis Fünffache der Strecke (B) zwischen dem fünften Punkt (11) und dem ersten Punkt (15) ausmacht.

9. Gelenkmechanismus nach Anspruch 7, dadurch gekennzeichnet, daß der Hub der Einrichtung (21) zur Ausübung einer Kraft das Zweifache der Strecke (D) für eine Versetzung um 180° ausmacht.

10. Künstliches, prothetisches oder Roboter-Glied, das einen oder mehrere der Gelenkmechanismen nach einem der Ansprüche 1 bis 9 aufweist.

11. Hebeplattform, mechanischer Bagger, Verlader oder Beschicker, der einen oder mehrere Gelenkmechanismen nach einem der Ansprüche 1 bis 9 aufweist.

Fig.1a.

Fig.1b.

Fig.2.

STROKE (180°) FOR I

FIXED ACTUATOR PIVOT

H = HEIGHT AT $\theta = \pm 90°$

COUPLER (A)

CRANK (B)

ROCKER (C)

FRAME (D)    STROKE FOR 180° ($\theta$  90°+TO - 90°) = 2 × FRAME LENGTH

Fig.3.

0 073 598

Fig.4.

OUTPUT TORQUE (CONSTANT ACTUATOR FORCE, B=1)

OUTPUT CRANK ANGLE

CONVENTIONAL

0 073 598

Fig.5.

Fig.6.

0 073 598